# EUROPÄISCHE PATENTSCHRIFT

(11) **EP 4 265 098 B1**
(45) Veröffentlichungstag und Bekanntmachung des Hinweises auf die Patenterteilung: **31.07.2024**
(21) Anmeldenummer: 23166869.0
(22) Anmeldetag: 05.04.2023
(51) Int. Cl.: A01D 75/12

(54) **VORRICHTUNG ZUR UNTERSTÜTZUNG EINES MESSERWECHSELS AN MÄHWERKEN**
DEVICE FOR ASSISTING THE EXCHANGE OF BLADES ON MOWERS
DISPOSITIF D'ASSISTANCE AU CHANGEMENT DE LAMES SUR DES FAUCHEUSES

(30) Priorität: 12.04.2022 DE 102022108861
(43) Veröffentlichungstag der Anmeldung: 25.10.2023
(73) Patentinhaber: CLAAS Saulgau GmbH, 88348 Bad Saulgau (DE)
(72) Erfinder: Siemer, Alfred, 26689 Apen/Godensholt (DE)

(56) Entgegenhaltungen:
- DE-A1- 102015 120 062
- DE-A1- 19 856 746

## Beschreibung

Die Erfindung betrifft eine Vorrichtung zur Unterstützung eines Messerwechsels an Mähwerken nach dem Oberbegriff des Anspruchs 1.

Aus der DE 198 56 746 A1 ist ein Mähwerk bekannt, welches dem Mähen von Gras dient. Ein derartiges Mähwerk wird auch als Kreiselmäher bezeichnet. Mähwerke, die dem Mähen von Gras dienen, verfügen über mindestens einen Mähbalken, wobei an jedem Mähbalken mehrere Mähorgane gelagert sind. Jedes Mähorgan ist dabei an einem Mähbalkendeckel des jeweiligen Mähbalkens gelagert, wobei jedes Mähorgan einen Mähteller, einen Messerträger und mindestens ein Messer umfasst. Das oder jedes Messer des jeweiligen Mähorgans ist über einen Zapfen, der mit dem Messerträger verbunden ist und sich durch eine Ausnehmung im Mähteller erstreckt, am jeweiligen Messerträger des jeweiligen Mähorgans gelagert. Beim Messerträger handelt es sich dabei vorzugsweise um eine Blattfeder, wobei zum Wechseln des oder jedes Messers der Messerträger relativ zum Mähteller verlagert werden kann, um so den jeweiligen Zapfen aus der jeweiligen Ausnehmung im Mähteller herauszubewegen und so das jeweilige Messer vom jeweiligen Zapfen entfernen zu können. Die DE 198 56 746 A1 offenbart eine Vorrichtung zur Unterstützung eines Messerwechsels.

Nach der DE 198 56 746 A1 umfasst die Vorrichtung zur Unterstützung eines Messerwechsels an einem Mähorgan eines Mähwerks einen Halter sowie einen Quersteg, wobei der Quersteg zwischen den Messerträger und den Mähteller des jeweiligen Mähorgans einführbar ist. Der Halter der Vorrichtung zur Unterstützung des Messerwechsels stellt einen Hebelarm bereit, über welchen auf die Vorrichtung eine Handkraft manuell ausgeübt werden kann, um so unter Ausnutzung der Hebelwirkung über den zwischen den Messerträger und den Mähteller positionierten Quersteg der Vorrichtung zur Unterstützung eines Messerwechsels den Messerträger und den Mähteller relativ zueinander zu verlagern.

Durch diese Verlagerung des Messerträgers und des Mähtellers relativ zueinander sind dieselben spreizbar bzw. aufbiegbar, wobei hierbei der mit dem Messerträger verbundene Zapfen aus der Ausnehmung im Mähteller herausbewegbar ist. Der Quersteg der aus der DE 198 56 746 A1 bekannten Vorrichtung zur Unterstützung eines Messerwechsels an einem Mähorgan eines Mähwerks kann als Spreizkörper oder Aufbiegekörper bezeichnet werden, der ausschließlich manuell unter Ausnutzung der Hebelwirkung durch Aufbringen einer Handkraft am Halter der Vorrichtung betätigt wird.

Aus der DE 10 2015 120 062 A1 ist eine weitere Vorrichtung zur Unterstützung eines Messerwechsels an einem Mähorgan eines Mähwerks bekannt. Die dort offenbarte Vorrichtung ist elektrisch fremdkraftunterstützt. Eine Aufbiegeeinrichtung, die zwischen den Messerträger und den Mähteller des jeweiligen Mähorgans einführbar ist, ist hierzu elektrisch fremdkraftbetätigt. Hierzu benötigt die Vorrichtung zur Unterstützung eines Messerwechsels einen Elektromotor.

Es besteht Bedarf an einer Vorrichtung zur Unterstützung eines Messerwechsels an Mähwerken, die über einen einfachen Aufbau verfügt und ohne die Notwendigkeit eines Elektromotors einen einfachen Messerwechsel erlaubt. Hiervon ausgehend liegt der vorliegenden Erfindung die Aufgabe zugrunde, eine neuartige Vorrichtung zur Unterstützung eines Messerwechsels an Mähwerken zu schaffen.

Diese Aufgabe wird durch eine Vorrichtung nach Anspruch 1 gelöst. Die erfindungsgemäße Vorrichtung verfügt über eine Hebeleinrichtung, die an einem Ende einen von Hand betätigbaren Betätigungsgriff aufweist, und die an einem zweiten Ende mindestens einen Aufbiegekörper aufweist, über die der Messerträger und der Mähteller des jeweiligen Mähorgans derart relativ zueinander verlagerbar sind, dass zur Ausführung des Messerwechsels der mit dem Messerträger verbundene Zapfen aus der Ausnehmung im Mähteller herausbewegbar ist. Die erfindungsgemäße Vorrichtung verfügt ferner über eine Abstützeinrichtung, die gelenkig an der Hebeleinrichtung gelagert ist und die sich bei einem Aufbiegevorgang am Mähteller abstützt. Die erfindungsgemäße Vorrichtung verfügt ferner über mindestens ein Federelement, welches den Aufbiegevorgang über den mindestens einen Aufbiegekörper unterstützt.

Die erfindungsgemäße Vorrichtung verfügt über mindestens ein Federelement. Das jeweilige Federelement greift einerseits an der von Hand betätigbaren Hebeleinrichtung und andererseits an der Abstützeinrichtung, die gelenkig an der Hebeleinrichtung gelagert ist, an. Das jeweilige Federelement unterstützt den Aufbiegevorgang, wobei sich bei dem Aufbiegevorgang die Abstützeinrichtung am Mähteller abstützt. Die erfindungsgemäße Vorrichtung verfügt über einen einfachen Aufbau und erlaubt einen einfachen Messerwechsel ohne die Notwendigkeit eines Elektromotors.

Vorzugsweise weist die Abstützeinrichtung mindestens einen Abstützkörper mit einem ersten Abstützschenkel und einem zweiten Abstützschenkel auf, wobei sich abhängig von der Relativposition zwischen der Hebeleinrichtung und der Abstützeinrichtung entweder der erste Abstützschenkel oder der zweite Abstützschenkel an einer jeweiligen Seite, und zwar an einer jeweils unterschiedlichen oder anderen Seite des Mähtellers, abstützt. Dies erlaubt einen besonders vorteilhaften und einfachen Messerwechsel.

Vorzugsweise weist die Hebeleinrichtung zwei mit Abstand zueinander angeordnete Hebel auf, die an dem ersten Ende der Hebeleinrichtung über den Betätigungsgriff verbunden sind, wobei jeder Hebel am zweiten Ende der Hebeleinrichtung jeweils mindestens einen Aufbiegekörper aufweist. Die Abstützeinrichtung weist vorzugsweise zwei mit Abstand zueinander angeordnete Abstützkörper auf, die über einen Querbalken verbunden sind. Vorzugsweise ist ein erster Abstützkörper der Abstützeinrichtung gelenkig an einem ersten Hebel der Hebeleinrichtung und ein zweiter Abstützkörper der Abstützeinrichtung gelenkig an einem zweiten Hebel der Hebeleinrichtung gelagert. Vorzugsweise greift ein erstes Federelement mit einem ersten Ende gelenkig an dem ersten Hebel und mit einem zweiten Ende gelenkig an dem ersten Abstützkörper an, wobei ein zweites Federelement mit einem ersten Ende gelenkig an dem zweiten Hebel und mit einem zweiten Ende gelenkig an dem zweiten Abstützkörper angreift. Dieser Aufbau der erfindungsgemäßen Vorrichtung ist besonders bevorzugt. Der Messerträger kann einfach mit geringem Kraftaufwand relativ zum Mähteller verlagert werden. Die beiden Federelemente unterstützen diesen Aufbiegevorgang.

Vorzugsweise ist ein Gelenk zwischen dem zweiten Ende des jeweiligen Federelements und der Abstützeinrichtung abhängig von der Relativposition zwischen der Hebeleinrichtung und der Abstützeinrichtung entweder auf einer ersten Seite oder auf einer zweiten Seite einer sich durch das Gelenk zwischen dem ersten Ende des jeweiligen Federelements und der Hebeleinrichtung und durch ein Gelenk zwischen der Abstützeinrichtung und der Hebeleinrichtung erstreckenden Geraden positioniert. Bei dem Aufbiegevorgang wechselt das Gelenk zwischen dem zweiten Ende des jeweiligen Federelements und der Abstützeinrichtung seine Relativposition zu dieser Geraden, die sich durch das Gelenk zwischen der Abstützeinrichtung und der Hebeleinrichtung und durch das Gelenk zwischen Federelement und der Hebeleinrichtung erstreckt. Abhängig von dieser Relativposition stützt sich entweder der erste Abstützschenkel oder der zweite Abstützschenkel auf dem Mähteller ab. Dann, wenn sich der zweite Abstützschenkel von oben auf dem Mähteller abstützt, wird das weitere Aufbiegen des Mähorgans durch das jeweilige Federelement vorteilhaft unterstützt. Das Federelement kann die Relativposition zwischen Hebeleinrichtung und Abstützeinrichtung aufrechterhalten, ohne dass der Bediener die Hebeleinrichtung betätigen muss. Der Bediener hat dann beide Hände für einen Messerwechsel frei.

Vorzugsweise ist das jeweilige Federelement eine Gasdruckfeder. Eine Gasdruckfeder ist besonders bevorzugt, um den Aufbiegevorgang zu unterstützen.

Vorzugsweise umfasst die Hebeleinrichtung an dem zweiten Ende als Aufbiegekörper mindestens eine Rolle und/oder mindestens eine Kugel. Solche Aufbiegekörper sind für einen einfachen und zuverlässigen Aufbiegevorgang besonders bevorzugt.

Bevorzugte Weiterbildungen der Erfindung ergeben sich aus den Unteransprüchen und der Beschreibung. Ausführungsbeispiele der Erfindung werden, ohne hierauf beschränkt zu sein, an Hand der Zeichnung näher erläutert. Dabei zeigt:
- Fig. 1: einen ausschnittsweisen Querschnitt durch ein Mähorgan eines Mähwerks;
- Fig. 2: eine perspektivische Ansicht einer erfindungsgemäßen Vorrichtung zur Unterstützung eines Messerwechsels an einem Mähorgan eines Mähwerks in einem ersten Zustand;
- Fig. 3: die Vorrichtung der Fig. 2 zusammen mit dem Mähorgan der Fig. 1 in einem ersten Zustand der erfindungsgemäßen Vorrichtung;
- Fig. 4: ein Detail der Fig. 3 in perspektivischer Ansicht,
- Fig. 5: einen Querschnitt durch das Detail der Fig. 4,
- Fig. 6: die Anordnung der Fig. 3 in einem zweiten Zustand der erfindungsgemäßen Vorrichtung;
- Fig. 7: einen ausschnittsweisen Querschnitt durch die Anordnung der Fig. 6;
- Fig. 8: den Querschnitt der Fig. 5 und 7 in einem dritten Zustand der erfindungsgemäßen Vorrichtung;
- Fig. 9: den Querschnitt der Fig. 8 beim Messerwechsel ohne die erfindungsgemäße Vorrichtung;
- Fig. 10: einen Querschnitt durch die erfindungsgemäße Vorrichtung im Zustand der Fig. 8;
- Fig. 11: die erfindungsgemäße Vorrichtung im Zustand der Fig. 8 in perspektivischer Ansicht.

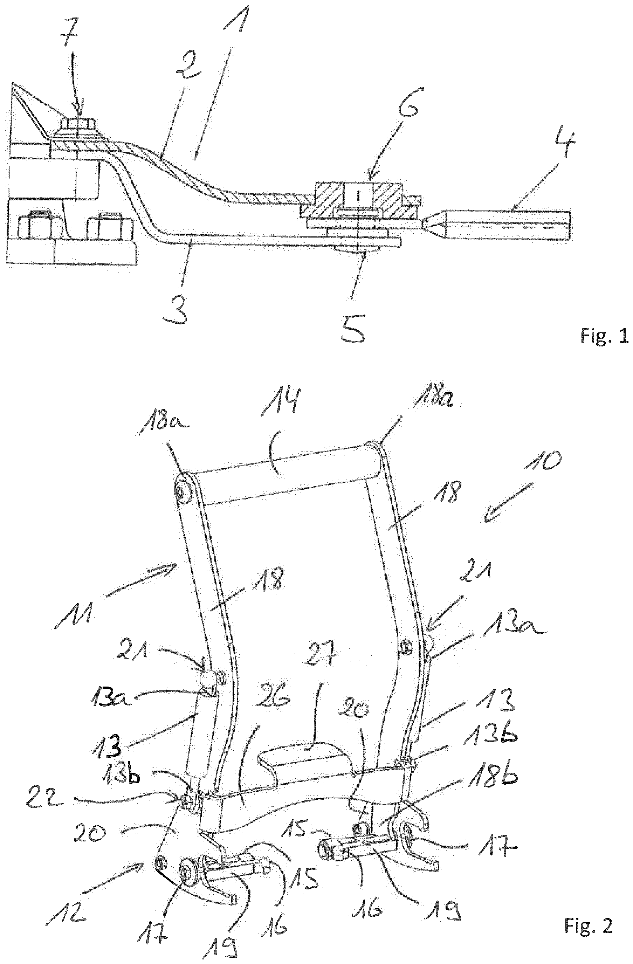

Fig. 1 zeigt einen Ausschnitt aus einem Mähwerk, insbesondere einem Kreiselmähwerk, welches dem Mähen von insbesondere Gras dient, im Bereich eines Mähorgans 1 des Mähwerks.

Das Mähorgan 1 verfügt über einen Mähteller 2, einen Messerträger 3 sowie vorzugsweise über zwei Messer 4. Die Anzahl der Messer 4 ist rein exemplarischer Natur. Die Messer 4 sind am Messerträger 3 befestigt, und zwar über jeweils einen Zapfen 5, der mit dem Messerträger 3 fest verbunden ist und an dem das jeweilige Messer 4 aufgenommen ist. Der Zapfen 5 erstreckt sich durch eine Ausnehmung 6 im Mähteller 2.

Zur Ausführung eines Messerwechsels kann der jeweilige Zapfen 5 durch Aufbiegen des Messerträgers 3 relativ zum Mähteller 2 aus der Ausnehmung 6 im Mähteller 2 herausbewegt werden, um dann zum Beispiel ein verschlissenes Messer 4 vom Zapfen 5 zu entfernen und gegen ein neues Messer auszutauschen. Gemäß Fig. 1 sind der Messerträger 3 und der Mähteller 2 des jeweiligen Mähorgans 1 miteinander über eine Schraubverbindung 7 verschraubt, wobei bei rotierendem Mähorgan 1 der Messerträger 3, die Messer 4 und der Mähteller 2 des Mähorgans 1 rotieren. Die Messer 4 werden dabei durch Fliehkräfte nach radial außen verlagert.

Wie oben ausgeführt, müssen zur Ausführung eines Messerwechsels an dem in Fig. 1 gezeigten Mähorgan 1 Messerträger 3 und Mähteller 2 relativ zueinander aufgebogen bzw. gespreizt werden, um den das auszutauschende Messer 4 aufnehmenden Zapfen 5 aus der Ausnehmung 6 im Mähteller 2 herauszubewegen und so das auszutauschende Messer 4 für einen Messerwechsel zugänglich zu machen. Die Erfindung schlägt eine Vorrichtung zur Unterstützung eines Messerwechsels an einem Mähwerk 1 vor, mit Hilfe derer dieses Aufbiegen bzw. Spreizen von Messerträger 3 und Mähteller 2 einfach und zuverlässig erfolgen kann.

Fig. 2 zeigt eine perspektivische Ansicht einer erfindungsgemäßen Vorrichtung 10 zur Unterstützung eines Messerwechsels an einem Mähorgan 1 eines Mähwerks. Die erfindungsgemäße Vorrichtung 10 verfügt über eine Hebeleinrichtung 11, über eine Abstützeinrichtung 12 sowie über mindestens ein Federelement 13.

Die Hebeleinrichtung 11 weist an einem Ende einen von Hand betätigbaren Betätigungsgriff 14 und an einem zweiten Ende mindestens einen Aufbiegekörper 15, 16 auf. Über den mindestens einen Aufbiegekörper 15, 16 ist die Hebeleinrichtung 11 zwischen Messerträger 3 und Mähteller 2 positionierbar, wobei über den mindestens einen Aufbiegekörper 15, 16 der Messerträger 3 und der Mähteller 2 des jeweiligen Mähorgans 1 derart relativ zueinander verlagerbar sind, dass zur Ausführung des Messerwechsels der mit dem Messerträger 3 verbundene Zapfen 5 aus der Ausnehmung 6 im Mähteller 2 herausbewegbar ist.

Die Abstützeinrichtung 12 ist gelenkig an der Hebeleinrichtung 11 gelagert, nämlich über mindestens ein Gelenk 17.

Die Abstützeinrichtung 12 stützt sich beim Aufbiegevorgang am Mähteller 2 ab.

Das mindestens eine Federelement 13 unterstützt den Aufbiegevorgang über den mindestens einen Aufbiegekörper 15, 16.

Im gezeigten Ausführungsbeispiel weist die Hebeleinrichtung 11 zwei mit Abstand zueinander angeordnete Hebel 18 auf. Die Hebel 18 verfügen über einen gekrümmten Verlauf mit zwei sich gegenüberliegenden Enden 18a, 18b. Die beiden Hebel 18 sind an ihren ersten Enden 18a über den Betätigungsgriff 14 miteinander verbunden. An den zweiten Enden 18b weisen die Hebel 18 jeweils mindestens einen Aufbiegekörper 15, 16 auf, der an einem an dem jeweiligen zweiten Ende 18b starr angeordneten Träger 19 befestigt ist.

Die Träger 19 der beiden Hebel 18 sind einander zugewandt, erstrecken sich ausgehend vom jeweiligen Hebel 18 also in Richtung auf den jeweils anderen Hebel 18, wobei die an den Enden dieser Hebel 19 aufgenommenen Aufbiegekörper 15, 16 der beiden Hebel 18 voneinander beabstandet sind.

Die gelenkig an der Hebeleinrichtung 11 gelagerte Abstützeinrichtung 12 verfügt im gezeigten Ausführungsbeispiel über zwei mit Abstand zueinander angeordnete Abstützkörper 20. Die beiden Abstützkörper 20 sind über einen Querbalken 26 miteinander verbunden. Ein erster Abstützkörper 20 der Abstützeinrichtung 12 ist an einem ersten Hebel 18 der Hebeleinrichtung 11 über ein Gelenk 17 drehbar befestigt. Ein zweiter Abstützkörper 20 der Abstützeinrichtung 12 ist an einem zweiten Hebel 18 der Hebeleinrichtung 11 über ein weiteres Lager 17 drehbar gelagert.

Die Abstützkörper 20 sind dabei an einer Seite des jeweiligen Hebels 18 angeordnet, die vom jeweiligen anderen Hebel 18 abgewandt ist.

Im gezeigten Ausführungsbeispiel verfügt die Vorrichtung 10 über zwei Federelemente 13.

Ein erstes Federelement 13 greift mit einem ersten Ende 13a über ein Gelenk 21 gelenkig am ersten Hebel 18 und an einem zweiten Ende 13b über ein zweites Gelenk 22 gelenkig am ersten Abstützkörper 20 der Abstützeinrichtung 12 an.

Ein zweites Federelement 13 greift mit einem ersten Ende 13a über ein Gelenk 21 am zweiten Hebel 18 der Hebeleinrichtung 11 und an einem gegenüberliegenden zweiten Ende 13b am zweiten Abstützkörper 20 über ein zweites Gelenk 22 gelenkig an.

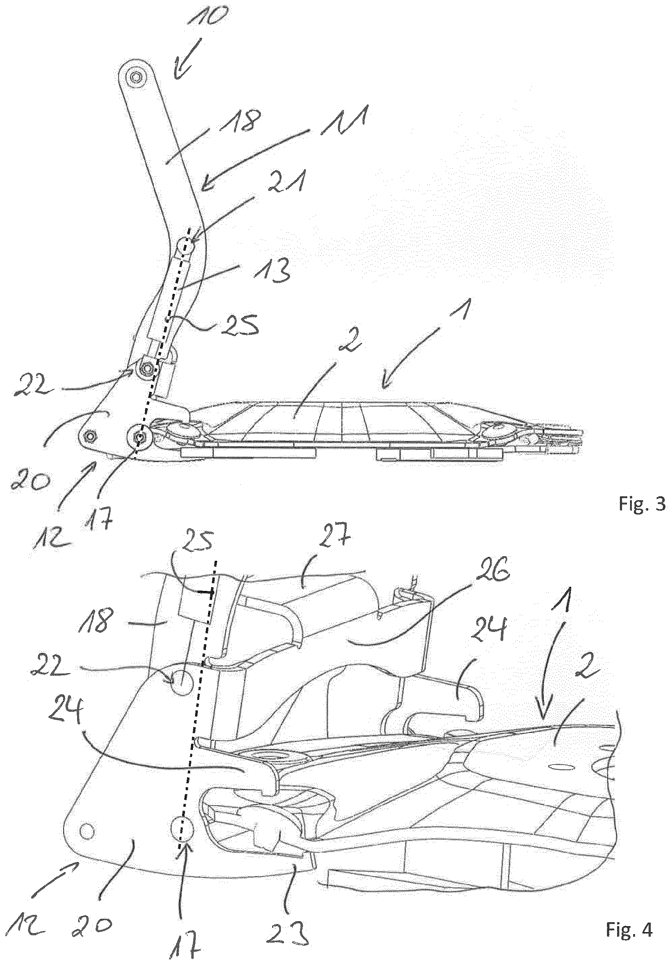

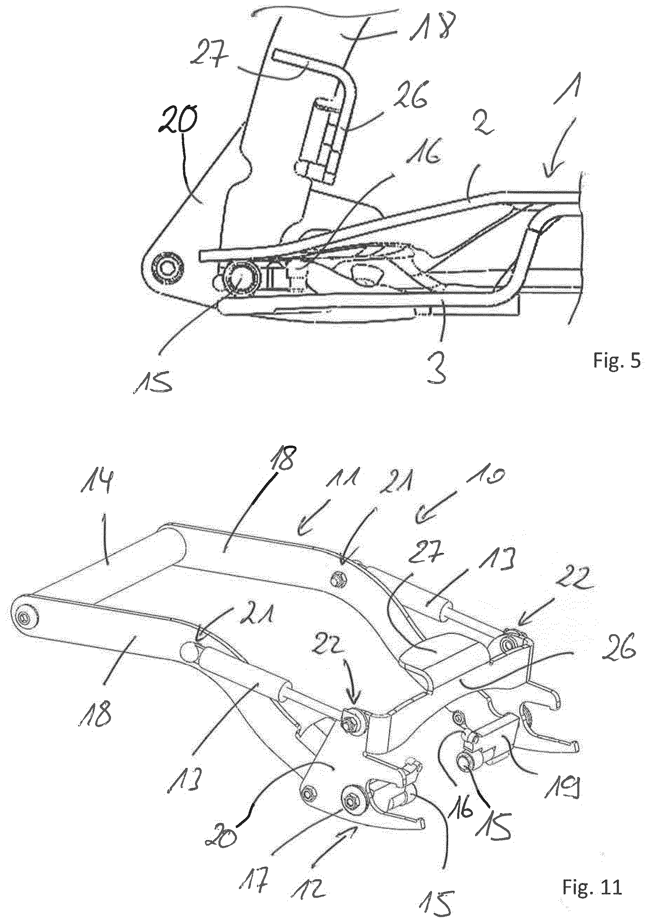

Fig. 2 zeigt die Vorrichtung 10 in einer Ausgangsstellung bzw. Ruhestellung, in welcher dieselbe an einem Mähorgan 1 (siehe Fig. 3) positioniert wird. Fig. 4 und 5 zeigen unterschiedliche Details der Fig. 3.

Dann, wenn die Vorrichtung 10 in ihrer Ausgangsstellung bzw. Ruhestellung der Fig. 2 an einem Mähorgan 1 angeordnet wird (siehe Fig. 3, 4 und 5), sind die Aufbiegekörper 15, 16 zwischen Messerträger 3 und Mähteller 2 des Mähorgans 1 eingeschoben. In diesem Zustand stützt sich die Abstützeinrichtung 12 mit ihren Abstützkörpern 20 an einer Unterseite des Mähtellers 2 ab.

Der jeweilige Abstützkörper 20 der Abstützeinrichtung 12 verfügt über zwei Abstützschenkel 23, 24. In der Ausgangsposition bzw. Ruheposition der Vorrichtung 10 (siehe Fig. 2, 3, 4) stützt sich dann, wenn die Vorrichtung 10 an einem Mähorgan 1 für einen Messerwechsel positioniert ist, der jeweilige Abstützkörper 20 über einen ersten Abstützschenkel 23 an einer Unterseite des Mähtellers 2 des Mähorgans 1 ab (siehe Fig. 4). In diesem Zustand ist das Gelenk 22 zwischen dem zweiten Ende 13b des jeweiligen Federelements 13 und der Abstützeinrichtung 12 auf einer ersten Seite einer Geraden 25 angeordnet, die sich durch das Gelenk 21 zwischen dem ersten Ende 13a des Federelements 13 und dem Hebel 18 sowie durch das Gelenk 17 zwischen der Abstützeinrichtung 12 und der Hebeleinrichtung 11 erstreckt (siehe Fig. 3). In dieser Ausgangsposition der Vorrichtung 10 ist der sich an der Unterseite des Mähtellers abstützende Abstützschenkel 23 der Abstützkörper 20 der Abstützeinrichtung 12 auf der anderen Seite der Geraden 25 angeordnet. In dieser Ausgangsposition wirken die Federelemente 13 so, dass die Hebel 18 durch die Federkraft an den Querbalken 26 gedrückt und dort gehalten werden.

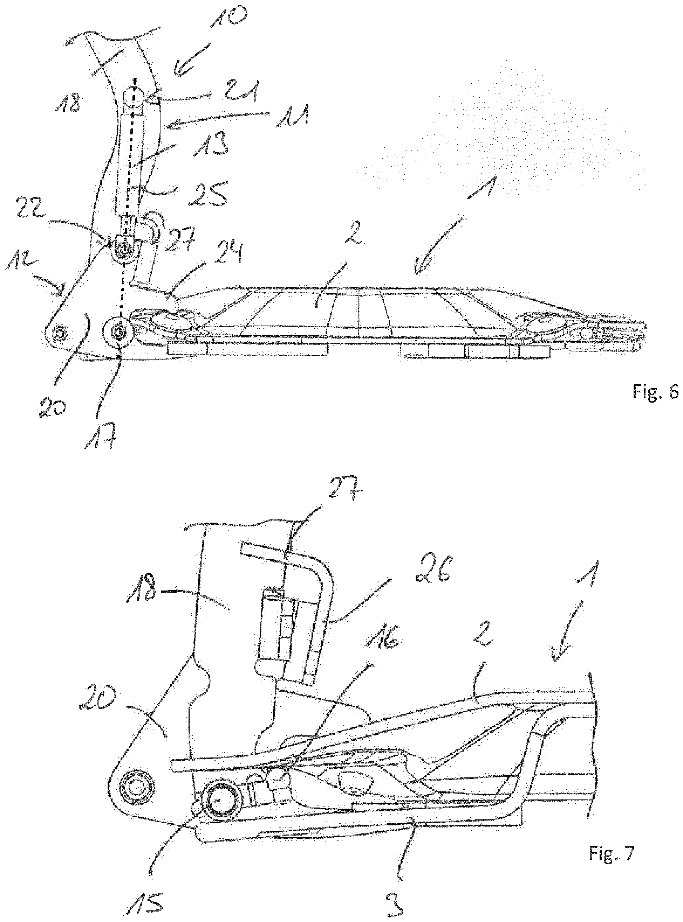

Fig. 6 und 7 zeigen die Vorrichtung 10 in einer aus der in Fig. 2, 3 und 4 gezeigten Ausgangsstellung bzw. Ruhestellung teilweise ausgelenkten Zwischenposition, in welcher das, zwischen dem zweiten Ende 13b des jeweiligen Federelements 13 und dem jeweiligen Abstützkörper 20 angeordnete, Gelenk 22 auf der Geraden 25 liegt, die sich durch die Gelenke 21 und 17 erstreckt. An dieser Position verlaufen die Kraftvektoren der Federelemente 13 exakt auf der jeweiligen Geraden 25, so dass die Kraftkomponente, welche die Hebel 18 zuvor an den Querbalken 26 gedrückt hat, verschwunden bzw. zu null geworden ist. Diese Position kann deshalb auch als Totpunktlage bezeichnet werden. An dieser Position wechselt bei weiterer Auslenkung der Hebel 18 die Abstützung der Abstützeinrichtung 12 von der Unterseite des Mähtellers 2 zur gegenüberliegenden Oberseite desselben. An der Oberseite stützt sich der jeweilige Abstützkörper 20 der Abstützeinrichtung 12 über den jeweiligen zweiten Abstützschenkel 24 am Mähteller 2 ab.

Beim weiteren Auslenken der Vorrichtung 10, also bei einer weiteren Relativverlagerung der Hebeleinrichtung 11 gegenüber der Abstützeinrichtung 12, über die in Fig. 6 und 7 gezeigte Totpunktlage hinaus entsteht eine Kraftkomponente der Federelemente 13, die in Richtung der weiteren Auslenkung wirkt und das weitere Auslenken der Hebeleinrichtung 11 unterstützt. Dabei stützt sich das jeweilige Federelement 13 über das Gelenk 22 am Abstützkörper 20 ab, der sich über den zweiten Abstützschenkel 24 an der Oberseite des Mähtellers 2 abstützt und unterstützt die Auslenkbewegung des Hebels 18 durch die Federkraft des Federelements 13.

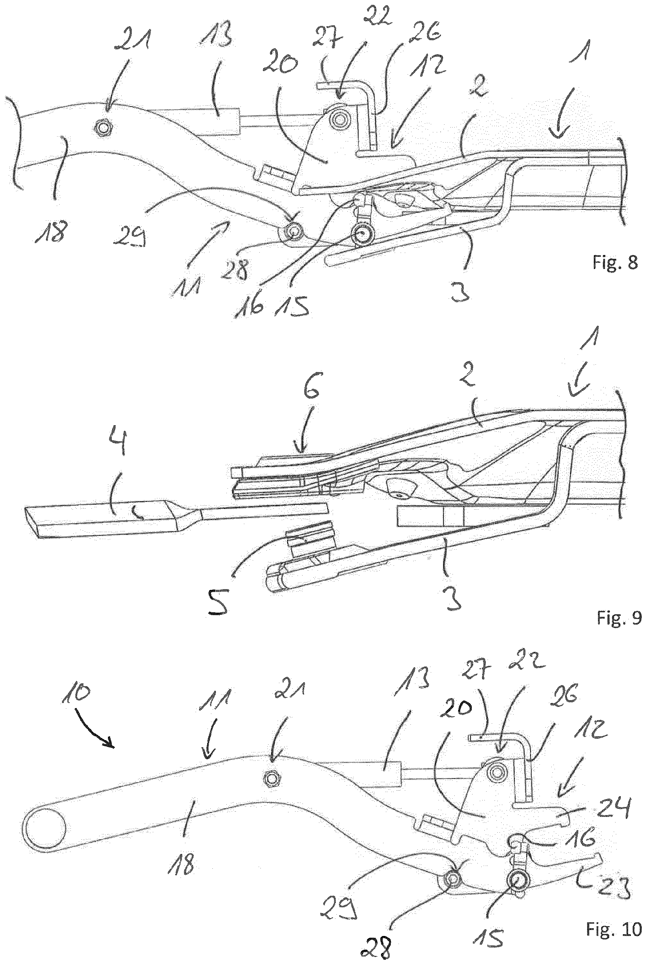

Die Federkraft hält die Hebeleinrichtung 11 in der jeweiligen Zwischenposition sowie in einer kompletten Öffnungsposition bzw. Betätigungsposition, die in Fig. 8 gezeigt ist. Fig. 10 und 11 zeigen die erfindungsgemäße Vorrichtung 10 ohne das Mähorgan 1 in demjenigen Zustand, in welchem dieselbe maximal in die Öffnungsstellung überführt ist. Fig. 9 zeigt ein Mähorgan 1 mit aufgebogenem Messerträger 3 beim Wechsel eines Messers 4.

Das maximale Öffnen der Vorrichtung 10 bzw. das maximale Auslenken der Hebeleinrichtung 11 relativ zur Abstützeinrichtung 12 beim Aufbiegen oder Spreizen eines Mähorgans wird dadurch beschränkt, dass ein Vorsprung 28 an mindestens einem Abstützkörper 20 der Abstützeinrichtung 12 in eine Ausnehmung 29 an einem Jeweiligen benachbarten Hebel 18 der Hebeleinrichtung 11 eingreift.

Um ein besonders vorteilhaftes Aufbiegen des Messerträgers 3 gegenüber dem Mähteller 2 bei einem Messerwechsel zu ermöglichen, ist jedem Hebel 18 der Hebeleinrichtung 11 am zweiten Ende 18b als erster Aufbiegekörper 15 eine Rolle und als zweiter Aufbiegekörper 16 eine Kugel zugeordnet. Der als Rolle ausgebildete erste Aufbiegekörper 15 rollt bei einem Aufbiegevorgang auf dem Messerträger 3 ab. Der als Kugel ausgebildete zweite Aufbiegekörper 16 wälzt sich bei einem Aufbiegevorgang an der Unterseite des Mähtellers 2 ab. Der zweite als Kugel ausgebildete Abstützkörper 16 besteht vorzugsweise aus gehärtetem Stahl.

Wie bereits ausgeführt, sind die beiden Abstützkörper 20 der Abstützeinrichtung 12 über den Querbalken 26 miteinander verbunden. An diesem Querbalken 26 greift eine Haltelasche 27 an, an welcher die Vorrichtung 10 ebenso wie am Betätigungsgriff 14 von einem Bediener gegriffen und gehalten werden kann, insbesondere dann, wenn die Vorrichtung 10 an einem Mähorgan 1 positioniert sowie von dem Mähorgan 1 entfernt wird.

Die erfindungsgemäße Vorrichtung ermöglicht ein einfaches Einsetzen derselben von vorne in ein Mähorgan 1. Für einen Aufbiegevorgang ist von einem Bediener eine nur geringe Kraft über den Betätigungsgriff 14 auf die Hebeleinrichtung 11 der Vorrichtung 10 aufzubringen. Im geöffneten Zustand wird die Vorrichtung 10 durch die Federelemente 13 selbsttätig gehalten, sodass einem Bediener für einen Messerwechsel beide Hände zur Verfügung stehen. Soll nach einem Messerwechsel der Aufbiegevorgang beendet werden und wird von einem Bediener die Hebeleinrichtung 11 durch Betätigung am Betätigungsgriff 14 zurück in ihre Ausgangsstellung geschwenkt, so führt dies dann, wenn ein neues Messer 4 nicht ordnungsgemäß positioniert wurde, zu einer Schwergängigkeit der Hebeleinrichtung 11, sodass ein Bediener dann unmittelbar Rückmeldung über einen nicht ordnungsgemäßen Messerwechsel erhält.

Darüber hinaus kann ein Bediener beispielsweise bei einem versehentlichen Einklemmen eines Fingers sofort vorteilhaft reagieren und die Bedienrichtung umkehren, um eine Verletzung auszuschließen. Bei einer fremdkraftbetätigten Messerwechselvorrichtung muss der Bediener in einem solchen Fall schnellstmöglich den entsprechenden Schalthebel zum Umsteuern betätigen, wobei sich dadurch eine erste Verzögerung ergibt und eine weitere bis die Vorrichtung ihre Betätigungsrichtung umgekehrt hat. Dadurch besteht bei Verwendung einer fremdkraftbetätigten Messerwechselvorrichtung eine erhöhte Verletzungsgefahr.

Die Federkraft, welche eines oder mehrere Federelemente 13 aufbringen, wird vorzugsweise so ausgelegt, dass diese etwa der wirksamen Federkraft beim Aufbiegen des Messerträgers 3 entspricht. Dadurch muss der Bediener beim Messerwechsel mit einer erfindungsgemäßen Vorrichtung 10 lediglich eine geringe Handkraft aufbringen, welche der Überwindung der Reibungskräfte entspricht. Dazu zählen insbesondere die Reibungskräfte der Gelenke der Vorrichtung 10 sowie der Abwälzbewegung des Aufbiegekörpers 16. Durch das Gleichgewicht, welches sich durch diese Auslegung des oder der Federelemente 13 mit der Federkraft des Messerträgers 3 einstellt, wird die Vorrichtung 10 in der Öffnungsstellung sowie in Zwischenstellungen durch die Reibungskräfte besonders vorteilhaft gehalten. Der Bediener hat somit beide Hände für den Messerwechsel frei und es können auch keine gefährlichen Situationen durch ein Zurückspringen der Hebeleinrichtung 11 entstehen, falls der Bediener den Betätigungsgriff 14 während der Betätigung versehentlich loslässt.

Durch eine Fehlbedienung - wie z. B. beim falschen Einlegen eines Messers-wird das Kräftegleichgewicht zwischen Federelement 13 und Messerträger 3 gestört und die Bedienkräfte steigen so stark an, dass der Bediener dadurch - wie bereits oben erwähnt - deutlich fühlbar auf seine Fehlbedienung aufmerksam gemacht wird.

### Bezugszeichenliste

- 1: Mähorgan
- 2: Mähteller
- 3: Messerträger
- 4: Messer
- 5: Zapfen
- 6: Ausnehmung
- 7: Schraubverbindung

- 10: Vorrichtung
- 11: Hebeleinrichtung
- 12: Abstützeinrichtung
- 13: Federelement
- 13a: erstes Ende
- 13b: zweites Ende
- 14: Betätigungsgriff
- 15: Aufbiegekörper
- 16: Aufbiegekörper
- 17: Gelenk
- 18: Hebel
- 18a: Ende
- 18b: Ende
- 19: Vorsprung
- 20: Abstützkörper
- 21: Gelenk
- 22: Gelenk
- 23: Abstützschenkel
- 24: Abstützschenkel
- 25: Gerade
- 26: Querbalken
- 27: Haltelasche
- 28: Vorsprung
- 29: Ausnehmung

## Patentansprüche

1. Vorrichtung (10) zur Unterstützung eines Messerwechsels an einem Mähorgan (1) eines Mähwerks, wobei das jeweilige Mähorgan (1) einen Mähteller (2), einen Messerträger (3) und mindestens ein Messer (4) umfasst, welches über einen Zapfen (5), der mit dem Messerträger (3) verbunden ist und sich durch eine Ausnehmung (6) im Mähteller (2) erstreckt, am Messerträger (3) gelagert ist,
mit einer Hebeleinrichtung (11), die an einem Ende einen von Hand betätigbaren Betätigungsgriff (14) aufweist, und die an einem zweiten Ende mindestens einen Aufbiegekörper (15, 16) aufweist, über den der Messerträger (3) und der Mähteller (2) des jeweiligen Mähorgans (1) derart relativ zueinander verlagerbar sind, dass zur Ausführung des Messerwechsels der mit dem Messerträger (3) verbundene Zapfen (5) aus der Ausnehmung (6) im Mähteller (2) herausbewegbar ist, **gekennzeichnet durch**
eine Abstützeinrichtung (12), die gelenkig an der Hebeleinrichtung (11) gelagert ist und die sich bei einem Aufbiegevorgang am Mähteller (2) abstützt,
und mindestens ein Federelement (13), welches den Aufbiegevorgang über den mindestens einen Aufbiegekörper (15, 16) unterstützt.

2. Vorrichtung nach Anspruch 1, **dadurch gekennzeichnet, dass** die Hebeleinrichtung (11) zwei mit Abstand zueinander angeordnete Hebel (18) aufweist, die an dem ersten Ende der Hebeleinrichtung (11) über den Betätigungsgriff (14) verbunden sind, wobei jeder Hebel (18) am zweiten Ende der Hebeleinrichtung (11) mindestens einen Aufbiegekörper (15, 16) aufweist.

3. Vorrichtung nach Anspruch 1 oder 2, **dadurch gekennzeichnet, dass** die Abstützeinrichtung (12) mindestens einen Abstützkörper (20) mit einem ersten Abstützschenkel (23) und einem zweiten Abstützschenkel (24) aufweist, wobei sich abhängig von der Relativposition zwischen der Hebeleinrichtung (11) und der Abstützeinrichtung (12) entweder der erste Abstützschenkel (23) oder der zweite Abstützschenkel (24) an einer jeweiligen Seite des Mähtellers (2) abstützt.

4. Vorrichtung nach einem der Ansprüche 1 bis 3, **dadurch gekennzeichnet, dass** die Abstützeinrichtung (12) zwei mit Abstand zueinander angeordnete Abstützkörper (20) aufweist, die über einen Querbalken (26) miteinander verbunden sind.

5. Vorrichtung nach Anspruch 2 und 4, **dadurch gekennzeichnet, dass** ein erster Abstützkörper (20) der Abstützeinrichtung (12) gelenkig an einem ersten Hebel (18) der Hebeleinrichtung (11) und ein zweiter Abstützkörper (20) der Abstützeinrichtung (12) gelenkig an einem zweiten Hebel (18) der Hebeleinrichtung (11) gelagert ist.

6. Vorrichtung nach einem der Ansprüche 1 bis 5, **dadurch gekennzeichnet, dass** das Federelement (13) oder alle Federelemente (13) eine Federkraft aufbringt bzw. aufbringen die etwa der Federkraft des Messerträgers (3) beim Aufbiegen entspricht.

7. Vorrichtung nach einem der Ansprüche 1 bis 6, **dadurch gekennzeichnet, dass** das mindestens eine Federelement (13) mit einem ersten Ende an der Hebeleinrichtung (11) und mit einem zweiten Ende an der Abstützeinrichtung (12) gelenkig angreift.

8. Vorrichtung nach Anspruch 7, **dadurch gekennzeichnet, dass** ein Gelenk (22) zwischen dem zweiten Ende des jeweiligen Federelements (13) und der Abstützeinrichtung (12) abhängig von der Relativposition zwischen der Hebeleinrichtung (11) und der Abstützeinrichtung (12) entweder auf einer ersten Seite oder auf einer zweiten Seite einer sich durch ein Gelenk (21) zwischen dem ersten Ende des jeweiligen Federelements (13) und der Hebeleinrichtung (11) und durch ein Gelenk (17) zwischen der Abstützeinrichtung (12) und der Hebeleinrichtung (11) erstreckenden Geraden (25) positioniert ist.

9. Vorrichtung nach Anspruch 2, 3 und 7 oder 8, **dadurch gekennzeichnet, dass** ein erstes Federelement (13) gelenkig an dem ersten Hebel (18) und dem ersten Abstützkörper (20) und ein zweites Federelement (13) gelenkig an dem zweiten Hebel (18) und dem zweiten Abstützkörper (20) angreift.

10. Vorrichtung nach einem der Ansprüche 1 bis 9, **dadurch gekennzeichnet, dass** das mindestens eine Federelement (13) eine Gasdruckfeder ist.

11. Vorrichtung nach einem der Ansprüche 1 bis 10, **dadurch gekennzeichnet, dass** die Hebeleinrichtung (11) an dem zweiten Ende als Aufbiegekörper (15, 16) mindestens eine Rolle und/oder mindestens eine Kugel umfasst.

## Claims

1. Apparatus (10) for assisting the exchange of blades on a mowing member (1) of a mower, wherein the respective mowing member (1) comprises a mowing disk (2), a blade carrier (3) and at least one blade (4) which is mounted on the blade carrier (3) via a pin (5) which is connected to the blade carrier (3) and which extends through a recess (6) in the mowing disk (2),
comprising a lever device (11) which has at one end an actuating handle (14) which can be actuated by hand, and which has at a second end at least one bending-open body (15, 16), the blade carrier (3) and the mowing disk (2) of the respective mowing member (1) being able to be displaced thereby relative to one another such that, for performing the exchange of blades, the pin (5) which is connected to the blade carrier (3) can be moved out of the recess (6) in the mowing disk (2), **characterized by**
a support device (12) which is mounted in an articulated manner on the lever device (11) and which is supported on the mowing disk (2) during a bending-open process,
and at least one spring element (13) which assists the bending-open process via the at least one bending-open body (15, 16).

2. Apparatus according to Claim 1, **characterized in that** the lever device (11) has two levers (18) which are arranged at a spacing from one another and which are connected at the first end of the lever device (11) via the actuating handle (14), wherein each lever (18) has at least one bending-open body (15, 16) at the second end of the lever device (11).

3. Apparatus according to Claim 1 or 2, **characterized in that** the support device (12) has at least one support body (20) with a first support limb (23) and a second support limb (24), wherein either the first support limb (23) or the second support limb (24) is supported on one respective side of the mowing disk (2) as a function of the relative position between the lever device (11) and the support device (12).

4. Apparatus according to one of Claims 1 to 3, **characterized in that** the support device (12) has two support bodies (20) which are arranged at a spacing from one another and which are connected together via a cross bar (26).

5. Apparatus according to Claim 2 and 4, **characterized in that** a first support body (20) of the support device (12) is mounted in an articulated manner on a first lever (18) of the lever device (11) and a second support body (20) of the support device (12) is mounted in an articulated manner on a second lever (18) of the lever device (11).

6. Apparatus according to one of Claims 1 to 5, **characterized in that** the spring element (13) applies, or all of the spring elements (13) apply, a spring force which corresponds approximately to the spring force of the blade carrier (3) when bending open said blade carrier.

7. Apparatus according to one of Claims 1 to 6, **characterized in that** the at least one spring element (13) acts in an articulated manner with a first end on the lever device (11) and acts in an articulated manner with a second end on the support device (12).

8. Apparatus according to Claim 7, **characterized in that** a joint (22) is positioned between the second end of the respective spring element (13) and the support device (12) as a function of the relative position between the lever device (11) and the support device (12), either on a first side or on a second side of a straight line (25) extending through a joint (21) between the first end of the respective spring element (13) and the lever device (11) and through a joint (17) between the support device (12) and the lever device (11).

9. Apparatus according to Claim 2, 3 and 7 or 8, **characterized in that** a first spring element (13) acts in an articulated manner on the first lever (18) and the first support body (20) and a second spring element (13) acts in an articulated manner on the second lever (18) and the second support body (20).

10. Apparatus according to one of Claims 1 to 9, **characterized in that** the at least one spring element (13) is a gas pressure spring.

11. Apparatus according to one of Claims 1 to 10, **characterized in that** the lever device (11) comprises at the second end at least one roller and/or at least one ball as the bending-open body (15, 16).

## Revendications

1. Dispositif (10) d'assistance au changement de lame sur un organe de coupe (1) d'une faucheuse, l'organe de coupe respectif (1) comprenant un plateau de coupe (2), un support de lame (3) et au moins une lame (4) qui est montée sur le support de lame (3) par l'intermédiaire d'un tourillon (5) qui est relié au support de lame (3) et qui s'étend à travers un évidement (6) dans le plateau de coupe (2),
avec un appareil à levier (11) qui présente à une extrémité une poignée d'actionnement (14) pouvant être actionnée à la main, et qui présente à une deuxième extrémité au moins un corps de flexion (15, 16) par l'intermédiaire duquel le support de lame (3) et le plateau de coupe (2) de l'organe de coupe respectif (1) peuvent être déplacés l'un par rapport à l'autre de telle sorte que pour effectuer le changement de lame, le tourillon (5) relié au support de lame (3) peut être sorti de l'évidement (6) dans le plateau de coupe (2), **caractérisé par**
un appareil d'appui (12) qui est monté de manière articulée sur l'appareil à levier (11) et qui s'appuie sur le plateau de coupe (2) lors d'un processus de flexion,
et au moins un élément élastique (13) qui assiste l'opération de flexion par l'intermédiaire de l'au moins un corps de flexion (15, 16).

2. Dispositif selon la revendication 1, **caractérisé en ce que** l'appareil à levier (11) présente deux leviers (18) agencés à distance l'un de l'autre, qui sont reliés à la première extrémité de l'appareil à levier (11) par l'intermédiaire de la poignée d'actionnement (14), chaque levier (18) présentant au moins un corps de flexion (15, 16) à la deuxième extrémité de l'appareil à levier (11).

3. Dispositif selon la revendication 1 ou 2, **caractérisé en ce que** l'appareil d'appui (12) présente au moins un corps d'appui (20) avec une première branche d'appui (23) et une deuxième branche d'appui (24) ; en fonction de la position relative entre l'appareil à levier (11) et l'appareil d'appui (12), soit la première branche d'appui (23) soit la deuxième branche d'appui (24) s'appuyant sur un côté respectif du plateau de coupe (2) .

4. Dispositif selon l'une quelconque des revendications 1 à 3, **caractérisé en ce que** l'appareil d'appui (12) présente deux corps d'appui (20) agencés à distance l'un de l'autre, qui sont reliés entre eux par l'intermédiaire d'une barre transversale (26).

5. Dispositif selon les revendications 2 et 4, **caractérisé en ce qu'**un premier corps d'appui (20) de l'appareil d'appui (12) est monté de manière articulée sur un premier levier (18) de l'appareil à levier (11) et un deuxième corps d'appui (20) de l'appareil d'appui (12) est monté de manière articulée sur un deuxième levier (18) de l'appareil à levier (11).

6. Dispositif selon l'une quelconque des revendications 1 à 5, **caractérisé en ce que** l'élément élastique (13) ou tous les éléments élastiques (13) appliquent une force élastique qui correspond approximativement à la force élastique du support de lame (3) lors de la flexion.

7. Dispositif selon l'une quelconque des revendications 1 à 6, **caractérisé en ce que** l'au moins un élément élastique (13) s'articule par une première extrémité sur l'appareil à levier (11) et par une deuxième extrémité sur l'appareil d'appui (12).

8. Dispositif selon la revendication 7, **caractérisé en ce qu'**une articulation (22) entre la deuxième extrémité de l'élément élastique respectif (13) et l'appareil d'appui (12) est positionnée, en fonction de la position relative entre l'appareil à levier (11) et l'appareil d'appui (12), soit sur un premier côté, soit sur un deuxième côté d'une droite (25) s'étendant à travers une articulation (21) entre la première extrémité de l'élément élastique respectif (13) et l'appareil à levier (11) et à travers une articulation (17) entre l'appareil d'appui (12) et l'appareil à levier (11).

9. Dispositif selon les revendications 2, 3 et 7 ou 8, **caractérisé en ce qu'**un premier élément élastique (13) s'articule sur le premier levier (18) et le premier corps d'appui (20) et un deuxième élément élastique (13) s'articule sur le deuxième levier (18) et le deuxième corps d'appui (20) .

10. Dispositif selon l'une quelconque des revendications 1 à 9, **caractérisé en ce que** l'au moins un élément élastique (13) est un ressort à pression de gaz.

11. Dispositif selon l'une quelconque des revendications 1 à 10, **caractérisé en ce que** l'appareil à levier (11) comprend au moins un rouleau et/ou au moins une bille à la deuxième extrémité en tant que corps de flexion (15, 16).
